# EUROPEAN PATENT SPECIFICATION

(11) **EP 3 712 004 B1**
(45) Date of publication and mention of the grant of the patent: **31.07.2024**
(21) Application number: 18877334.5
(22) Date of filing: 05.10.2018
(51) Int. Cl.: B61L 15/00, B61L 27/57, B60L 3/12

(54) **TRAIN CONTROL DEVICE AND TRAIN CONTROL METHOD**
ZUGSTEUERUNGSVORRICHTUNG UND ZUGSTEUERUNGSVERFAHREN
DISPOSITIF DE COMMANDE DE TRAIN ET PROCÉDÉ DE COMMANDE DE TRAIN

(30) Priority: 17.11.2017 JP 2017221990
(43) Date of publication of application: 23.09.2020
(73) Proprietor: Hitachi, Ltd., Tokyo 100-8280 (JP)
(72) Inventor: MAESHIMA, Yuzo, Tokyo 100-8280 (JP)
(74) Representative: Mewburn Ellis LLP
(86) International application number: PCT/JP2018/037322
(87) International publication number: WO 2019/097890

(56) References cited:
- WO-A1-2015/036254
- WO-A2-2014/191141
- DE-A1- 102011 077 760
- JP-A- 2001 145 201
- JP-A- 2016 137 731
- JP-A- 2016 137 731
- JP-A- H0 769 213

## Description

### Technical Field

The present invention relates to a train control device including a ground device and an on-board device and a train control method.

### Background Art

In the past, in the case where a train stayed overnight and was returned from the overnight stay to a normal operation, a train operator boarded the train and manually turned on a power supply.

In addition, Patent Literature 1 discloses a method of reducing power consumption of an on-board device when a train stays overnight in a situation where the power supply of the on-board device cannot be turned off to detect and recognize the position of the train even after the end of commercial operation in a wireless train control system.

### Citation List

### Patent Literature

Patent Literature 1: Japanese Unexamined Patent Application Publication No. 2016-137731

### Summary of Invention

### Technical Problem

A method of automatically returning to a normal operation when a train stays overnight has not been provided. In addition, since a period of time from the overnight stay of the train to the start of an operation is unknown, there has been a problem that a battery mounted in the on-board device has not been able to be efficiently charged.

In addition, Patent Literature 1 refers to neither a period of time from the overnight stay to the start of an operation nor charging to a battery mounted in the on-board device.

An object of the present invention is to provide a method of automatically returning to a normal operation when a train stays overnight and a method of efficiently charging a battery mounted in an on-board device in accordance with a period of time from the overnight stay of the train to the start of an operation.

### Solution to Problem

A train control device according to the present invention comprises a ground device that manages an operation of a train and an on-board device that is mounted in the train. The ground device and the on-board device mutually maintain transmission and reception of telegram messages including a period during which an operation state of the train is overnight stay, the ground device transmits an overnight stay start instruction signal and an operation start time signal of the train to the on-board device, and the on-board device having received both the signals turns off a power supply after power required by the on-board device during a period of the overnight stay at least until the operation start time is charged. The present invention is defined by the train control device claim 1 and train control method claim 8.

### Advantageous Effects of Invention

According to the present invention, it is possible to automatically return to a normal operation when a train stays overnight through collaboration between a ground device and an on-board device and to efficiently charge a battery mounted in the on-board device in accordance with a period of time from the overnight stay of the train to the start of an operation.

### Brief Description of Drawings

Fig. 1 is an outline view for showing a configuration of a train control device according to an embodiment of the present invention.
Fig. 2 is a diagram for showing an outline of an entire sequence from the start of overnight stay to the end.
Fig. 3 is a diagram for showing conditions and a process of starting management of overnight stay by a ground device.
Fig. 4 is a diagram for showing conditions and a process of monitoring a state during overnight stay by the ground device.
Fig. 5 is a diagram for showing conditions and a process when the ground device determines an abnormality of an on-board operation mode.
Fig. 6 is a diagram for showing conditions and a process when the ground device performs determination as being abnormal due to communication disconnection.
Fig. 7 is a diagram for showing conditions and a process of starting overnight stay return by the ground device.
Fig. 8 is a diagram for showing conditions and a process of completing the overnight stay return by the ground device.
Fig. 9 is a diagram for showing conditions and a process of terminating overnight stay state management by the ground device.

### Description of Embodiments

Hereinafter, an embodiment of a train control device according to the present invention will be described with reference to the drawings.

However, although the embodiment described below shows a concrete example of the embodiment of the present invention, the present invention is not limited to the embodiment shown below, and various changes and modifications can be made by those skilled in the art within a range of technical ideas disclosed in the following claims.

In addition, elements having the same function will be followed by the same sign in the drawings for explaining the embodiment, and a repeated explanation thereof will be omitted in some cases.

### [Embodiment]

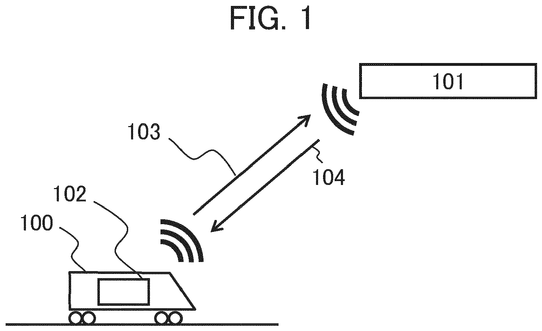

Fig. 1 is an outline view for showing a configuration of a train control device according to an embodiment of the present invention.

A train 100 travelling on a predetermined track is controlled by an on-board device 102 mounted in the train 100. The on-board device 102 transmits a signal 103 such as train positional information to a ground device 101. On the other hand, the ground device 101 transmits a signal 104 such as train control information to the train 100. In addition, both of the train 100 and the ground device 101 include communication units (not shown) for transmitting and receiving the signal 103 such as the train positional information and the signal 104 such as the train control information.

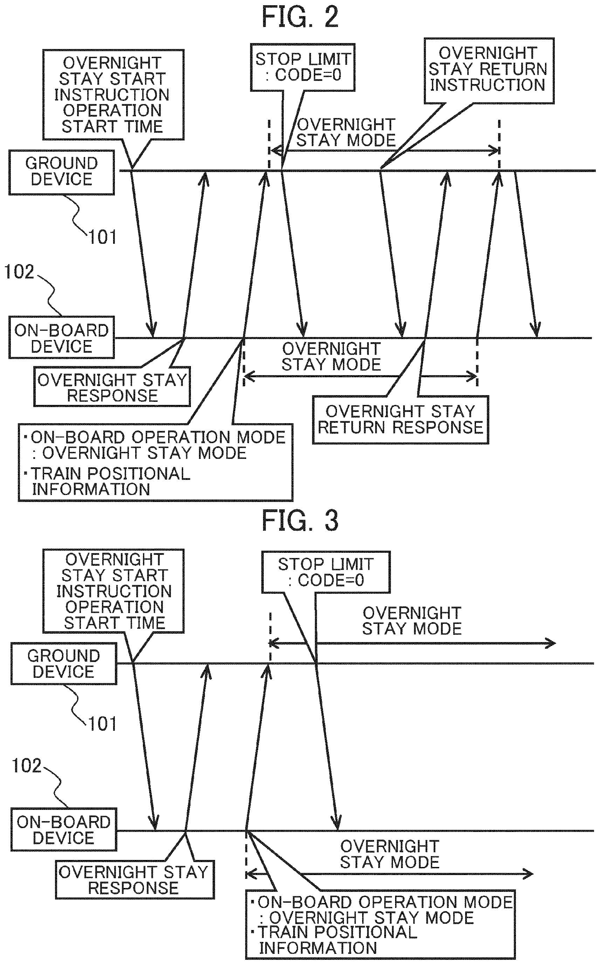

Fig. 2 is a diagram for showing an outline of an entire sequence from the start of overnight stay of the train to the end.

The ground device 101 transmits an overnight stay start instruction signal and an operation start time signal to the on-board device 102. Regarding the overnight stay start instruction, in the case where the ground device 101 is provided with an operation management unit that performs a function of managing an operation schedule (train diagram) of a train, a method of instructing the train to start overnight stay on the basis of the operation schedule (train diagram) can be employed.

On the other hand, when the on-board device 102 receives the overnight stay start instruction signal and the operation start time signal, the on-board device 102 sends back an overnight stay response signal to the ground device 101, and is transited to an overnight stay mode. Here, the on-board device 102 is equipped with a battery (not shown) as a power supply unit for allowing devices and the like included in the on-board device 102 to operate. When being transited to the overnight stay mode, the on-board device 102 charges, at least, power (namely, power required during an overnight stay period until the start of the operation) enough to continue wireless operations and position calculations until the operation start time to the battery, and automatically turns off the power supply after the power required during the overnight stay period until the start of the operation is charged to the battery.

In addition, in the case where an on-board operation mode is transited to the overnight stay mode, the ground device 101 manages the corresponding train as an overnight stay state (overnight stay mode). Here, the on-board operation mode indicates an operation state (operation mode) of a train.

Here, even in the overnight stay mode, communications between the on-board device 102 and the ground device 101 are continued. The on-board device 102 transmits an overnight stay mode signal as an on-board operation mode signal and a signal of train positional information to the ground device 101 every fixed cycle. In addition, an alarm signal may be included as needed. On the other hand, the ground device 101 transmits a stop limit signal to the on-board device 102 every fixed cycle. Here, it is, at least, not necessary to synchronize the transmission and reception from the on-board device 102 with the transmission and reception from the ground device 101.

Next, in the case where the train is allowed to return to a normal operation from the overnight stay state (hereinafter, abbreviated as "overnight stay return") mainly at the time of the start of the operation (a case responding to emergency and the like can be assumed), an overnight stay return instruction signal is transmitted from the ground device 101 to the on-board device 102. The on-board device 102 having received the overnight stay return instruction signal sends back an overnight stay return response signal to the ground device 101, and starts a return process to the normal operation of the train. In addition, regarding the overnight stay return instruction, the operation management unit included in the ground device 101 can issue an instruction for the overnight stay return to the corresponding train from the operation start time obtained on the basis of the operation schedule (train diagram) of the train.

The ground device 101 resets information on train control until the last time to start the return process to the normal operation of the train by using the overnight stay return response signal from the on-board device 102 as a trigger.

Then, the ground device 101 confirms a state of the on-board device 102, and the overnight stay return is completed after the return to the normal operation of the train is completed.

Further, the ground device 101 terminates the overnight stay state management after the on-board device 102 is transited from the overnight stay mode to a full automatic operation mode or a full monitoring manual mode, and starts normal train control.

Hereinafter, a series of sequences from the start of overnight stay of the train to the start of normal train control through the completion of the overnight stay return will be described.

### (1) Start of overnight stay state management

Fig. 3 is a diagram for showing conditions and a process of starting overnight stay state management by the ground device 101.

### (1-1) Conditions of start of overnight stay state management

·The ground device 101 receives the overnight stay mode signal as the on-board operation mode signal from the on-board device 102.
·The ground device 101 does not manage the on-board device 102 as the overnight stay state.

### (1-2) Process at the time of start of overnight stay

·The ground device 101 manages the on-board device 102 as the overnight stay state.
·The ground device 101 performs train tracking using the train positional information that is periodically received from the on-board device 102 during overnight stay.

Here, the on-board device 102 is provided with a function of calculating the train position of the on-board device 102, and periodically performs position calculations to be used as the train positional information that is periodically transmitted to the ground device 101. As the train position calculation function, a video recording device and a GPS device can be used.
·An authentication mode continues being-travelling. The "authentication" used herein means to confirm a state of train control, and the same applies hereinafter.
·The stop limit signal periodically transmitted to the on-board device 102 uses an immediate stop code (code=0).

### (2) State monitoring during overnight stay

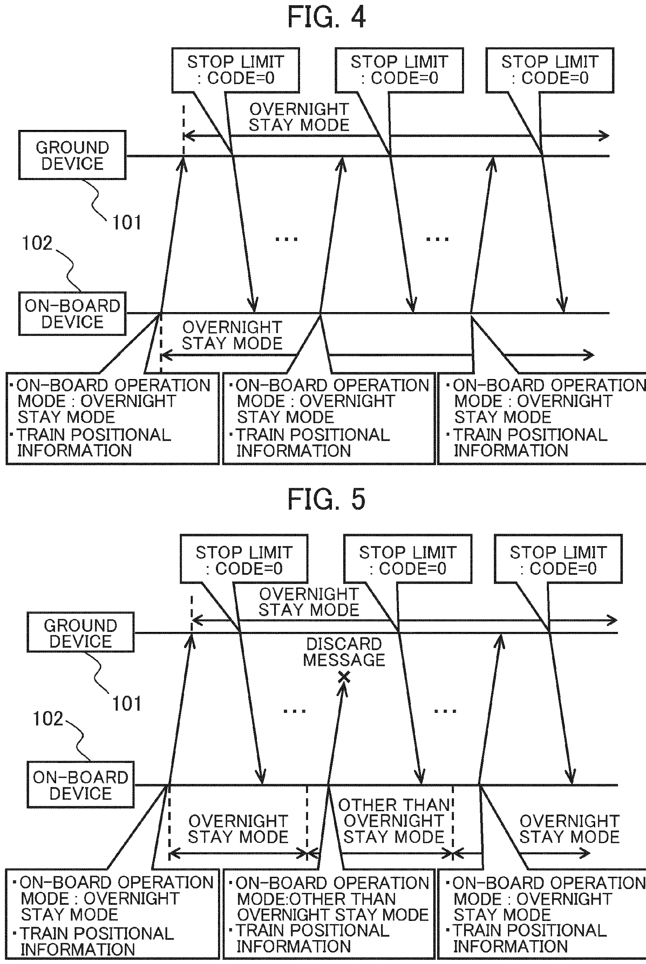

Fig. 4 is a diagram for showing conditions and a process of monitoring a state during overnight stay by the ground device 101.

### (2-1) Conditions of state monitoring during overnight stay

·The ground device 101 receives the overnight stay mode signal as the on-board operation mode signal from the on-board device 102.
·The ground device 101 is managing the on-board device 102 as the overnight stay state.
·The on-board device 102 is communicating with the ground device 101.

### (2-2) Process in normal state

·The ground device 101 performs train tracking using the train positional information that is periodically received from the on-board device 102 during overnight stay.
·The authentication mode continues being-travelling.
·The stop limit signal periodically transmitted to the on-board device 102 uses the immediate stop code (code=0).

### (3) Abnormality of on-board operation mode

Fig. 5 is a diagram for showing conditions and a process when the ground device 101 determines an abnormality of the on-board operation mode.

### (3-1) Conditions under which the on-board operation mode is determined as being abnormal

·The ground device 101 is managing the on-board device 102 as the overnight stay state.
·The ground device 101 receives a signal other than the overnight stay mode signal as the on-board operation mode signal from the on-board device 102.

### (3-2) Process in abnormal state

The ground device 101 discards telegram messages of data received from the on-board device 102 as being abnormal, and treats as non-reception.

In addition, in the case where the on-board operation mode remains as an abnormal state until the operation start time without performing the return process described in (3-3), the ground device 101 issues an alarm, and can output both of the on-board operation mode and the train positional information. The case of issuing an alarm in an abnormal state may include a limited case in which it is necessary to allow a maintenance person or the like to head to a train in which an abnormality has occurred at the time of the start of the operation.

### (3-3) Return process

The ground device 101 continues the overnight stay mode when the data received from the on-board device 102 becomes normal.

### (4) Abnormality of communication disconnection

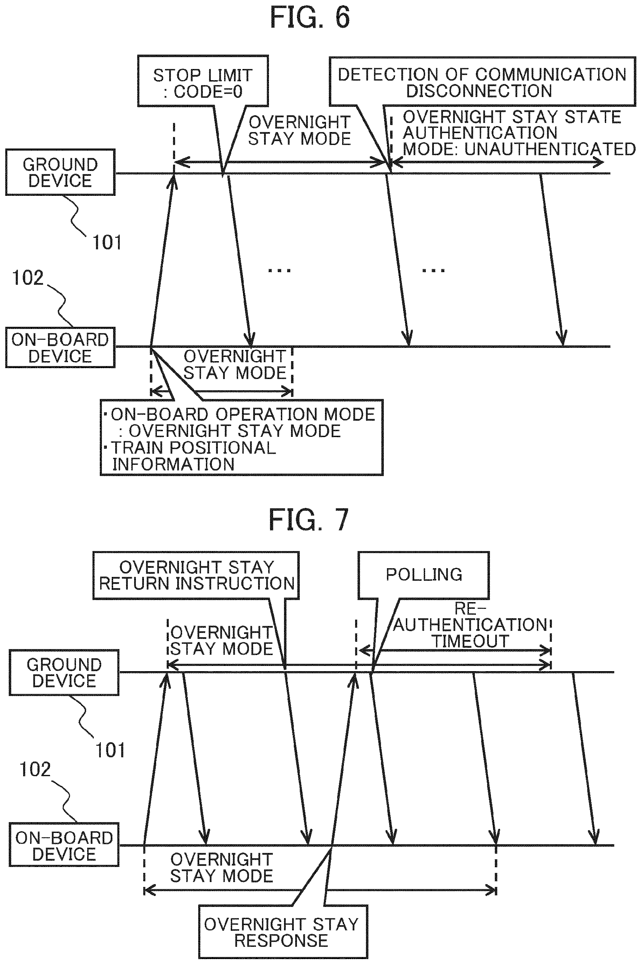

Fig. 6 is a diagram for showing conditions and a process when the ground device 101 performs determination as being abnormal due to communication disconnection.

### (4-1) Abnormality conditions by detecting communication disconnection that recovers in a fixed period of time

·The ground device 101 is managing the on-board device 102 as the overnight stay state.
·The ground device 101 detects communication disconnection of the on-board device 102.

### (4-2) Process in abnormal state

·The ground device 101 does not output an emergency stop signal to the on-board device 102.
·The ground device 101 continues to manage the on-board device 102 as the overnight stay state, and also manages as an unauthenticated (no confirmation of the state of the train control) mode.

In addition, in the case where the abnormal state continues due to the communication disconnection until the operation start time without performing the return process to be described in (4-3) below, the ground device 101 may perform a process in the abnormal state similar to the content described in (3-2).

### (4-3) Return process

·The ground device 101 resumes the communications with the on-board device 102, and continues the overnight stay mode.

### (5) Start of overnight stay return

Fig. 7 is a diagram for showing conditions and a process of starting the overnight stay return by the ground device 101.

### (5-1) Conditions of start of overnight stay return

·The ground device 101 is managing the on-board device 102 as the overnight stay state.
·The ground device 101 receives the overnight stay return response signal from the on-board device 102.

However, there are two cases of receiving the overnight stay return response signal: a case in which the on-board device 102 replies to the overnight stay return instruction signal transmitted from the ground device 101 shown in Fig. 7 (a case shown in Fig. 7); and a case in which the on-board device 102 transmits to take an action of starting the operation in response to the operation start time received together with the overnight stay start instruction from the ground device 101.

### (5-2) Process in normal state

·The ground device 101 performs train tracking at the position on the track located before receiving the overnight stay return response signal from the on-board device 102.
·The stop limit signal periodically transmitted to the on-board device 102 uses the immediate stop code (code=0).
·The ground device 101 sets the authentication mode during the overnight stay return.
·The ground device 101 starts to monitor re-authentication timeout.
·The ground device 101 periodically transmits a polling signal for re-authentication to the on-board device 102 during the monitoring time of the re-authentication timeout.

### (5-3) Conditions determined as being abnormal

The ground device 101 receives the overnight stay return response signal from the on-board device 102 under a situation where the ground device 101 does not manage the on-board device 102 as the overnight stay state.

### (5-4) Process in abnormal state

The ground device 101 discards telegram messages of data received from the on-board device 102 as being abnormal, and treats as non-reception.

### (5-5) Return process

The ground device 101 continues the process when the data received from the on-board device 102 becomes normal.

### (6) Completion of overnight stay return

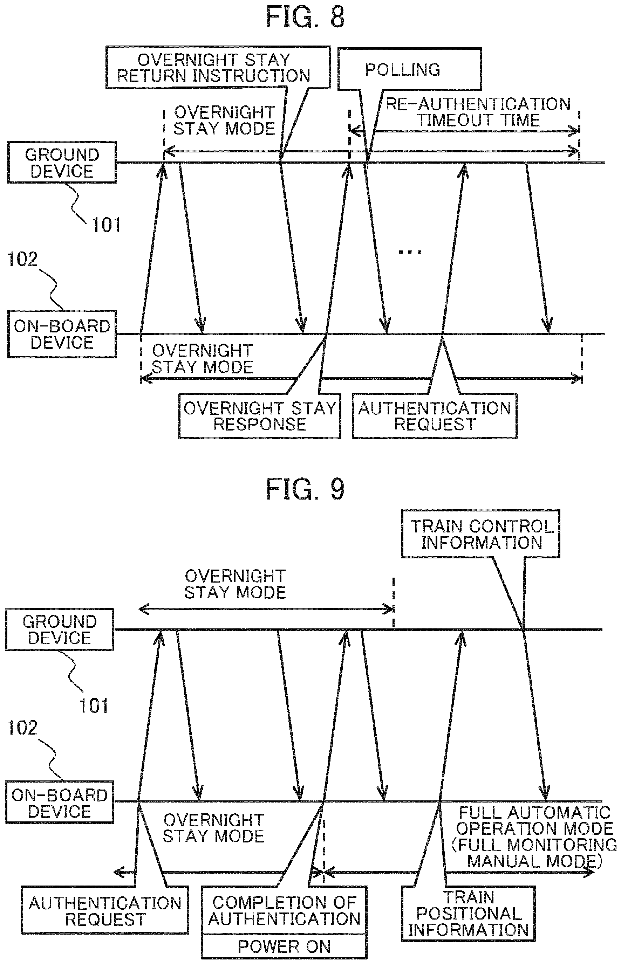

Fig. 8 is a diagram for showing conditions and a process of completing the overnight stay return by the ground device 101.

### (6-1) Conditions of completion of overnight stay return

·The ground device 101 is managing the on-board device 102 as the overnight stay state.
·The ground device 101 receives an authentication request signal during the monitoring time of the re-authentication timeout from the on-board device 102 having received the polling signal for re-authentication.

### (6-2) Process in normal state

The ground device 101 performs determination as completion of return from overnight stay on the basis of the authentication request signal received from the on-board device 102 in the state of the authentication mode during the overnight stay return.

### (7) Termination of overnight stay state management

Fig. 9 is a diagram for showing conditions and a process of terminating the overnight stay state management by the ground device 101.

### (7-1) Conditions of termination of overnight stay state management

·As the on-board operation mode, the overnight stay mode is transited to the full automatic operation mode or the full monitoring manual mode when the on-board device 102 transmits an authentication completion signal to the ground device 101 and the power supply is turned on.
·When the ground device 101 receives the authentication completion signal from the on-board device 102, the on-board operation mode is changed, and the return process of the train to the normal operation is determined to be completed.

### (7-2) Process in normal state

·The ground device 101 terminates the management of the on-board device 102 as the overnight stay state.
·The ground device 101 starts normal train control.

Next, when the overnight stay state is terminated to be returned to the normal operation and normal train control is started, the ground device 101 transmits the train control information to the on-board device 102. On the other hand, the on-board device 102 periodically transmits the train positional information to the ground device 101.

### [List of Reference Signs]

- 100: train
- 101: ground device
- 102: on-board device
- 103: signal of train positional information or the like
- 104: signal of train control information or the like

## Claims

1. A train control device comprising a ground device (101) that manages an operation of a train (100) and an on-board device (102) that is mounted in the train,
wherein the on-board device (102) is equipped with a battery as a power supply unit for allowing devices included in the on-board device to operate, and
wherein the ground device (101) and the on-board device (102) mutually maintain transmission and reception of telegram messages;
**characterized in that**:
the mutual maintenance of transmission and reception of telegram messages includes a period during which an operation state of the train (100) is overnight stay,
the ground device (101) transmits both signals of an overnight stay start instruction and operation start time of the train (100) to the on-board device (102), and
the on-board device (102), having received both the signals, turns off a power supply after power required by the on-board device during a period of the overnight stay at least until the operation start time is charged to the battery.

2. The train control device according to Claim 1,
wherein the ground device (101) transmits to the on-board device (102) a signal of an overnight stay return instruction for returning the train (100) from the overnight stay to a normal operation, and
wherein the on-board device (102) having received the signal of the overnight stay return instruction turns on the power supply when returning from the state of the overnight stay to the normal operation.

3. The train control device according to claim 2,
wherein the ground device (101) manages a train diagram as an operation schedule of the train (100), and transmits at least one of the signals of the overnight stay start instruction and the overnight stay return instruction to the on-board device (102) mounted in the train on the basis of the train diagram.

4. The train control device according to any one of claims 1 to 3,
wherein the on-board device (102) periodically transmits information indicating an operation state and a train position of the train (100) in which the on-board device is mounted to the ground device (101).

5. The train control device according to claim 4,
wherein the on-board device (102) is provided with a video recording device, and
wherein the information indicating the train position of the train (100) in which the on-board device (102) is mounted is obtained by position calculations using the video recording device.

6. The train control device according to any one of claims 2 to 5,
wherein the ground device (101) discards the telegram messages received from the on-board device during a period of an occurrence of an abnormality in the on-board device (102) in the period of the overnight stay.

7. The train control device according to any one of claims 2 to 6,
wherein the ground device (101) issues an alarm in the case where the abnormality having occurred in the on-board device (102) in the period of the overnight stay continues until the operation start time.

8. A train control method comprising:
a first step of mutually transmitting and receiving telegram messages on a ground side where an operation of a train is managed and on an on-board side inside the train, and transmitting both signals of an overnight stay start instruction and operation start time of the train from the ground side to the on-board side; and
a second step of receiving both the signals on the on-board side, starting overnight stay of the train on the basis of both the signals, charging power required on the on-board side during a period of the overnight stay at least until the operation start time to a battery as a power supply unit included on the on-board side, and turning off a power supply after completion of the charging.

9. The train control method according to claim 8, comprising:
a third step of transmitting a signal of an overnight stay return instruction for returning the train from the state of the overnight stay to a normal operation from the ground side to the on-board side; and
a fourth step of receiving the signal of the overnight stay return instruction on the on-board side and turning on the power supply when returning from the state of the overnight stay to the normal operation.

10. The train control method according to claim 9, comprising a first abnormality handling step of discarding the telegram messages, on the ground side, received from the on-board side during a period of an occurrence of an abnormality on the on-board side in the period of the overnight stay.

11. The train control method according to claim 9 or 10, comprising a second abnormality handling step of issuing an alarm on the ground side in the case where the abnormality having occurred on the on-board side in the period of the overnight stay continues until the operation start time.

## Patentansprüche

1. Zugsteuervorrichtung, die eine stationäre Vorrichtung (101), die einen Betrieb eines Zugs (100) verwaltet, und eine Bordvorrichtung (102), die im Zug angebracht ist, umfasst,
wobei die Bordvorrichtung (102) mit einer Batterie als Stromversorgungseinheit ausgestattet ist, um zu ermöglichen, dass Vorrichtungen, die in der Bordvorrichtung beinhaltet sind, zu betreiben, und
wobei die stationäre Vorrichtung (101) und die Bordvorrichtung (102) gegenseitig ein Senden und einen Empfang von Telegramm-Nachrichten aufrechterhalten;
**dadurch gekennzeichnet, dass**:
das gegenseitige Aufrechterhalten des Sendens und des Empfangs von Telegramm-Nachrichten einen Zeitraum umfasst, während dessen ein Betriebszustand des Zugs (100) ein Über-Nacht-Aufenthalt ist,
die stationäre Vorrichtung (101) beide Signale einer Anweisung für einen Über-Nacht-Aufenthalt und einer Betriebsstartzeit des Zugs (100) an die Bordvorrichtung (102) sendet und
die Bordvorrichtung (102), die die beiden Signale empfangen hat, eine Stromversorgung abschaltet, nachdem die Leistung, die von der Bordvorrichtung während eines Zeitraums eines Über-Nacht-Aufenthalts benötigt wird, zumindest bis zur Betriebsstartzeit in die Batterie geladen wurde.

2. Zugsteuervorrichtung nach Anspruch 1,
wobei die stationäre Vorrichtung (101) ein Signal einer Rückführungsanweisung für einen Über-Nacht-Aufenthalt zum Rückführen des Zugs (100) vom Über-Nacht-Aufenthalt in einen Normalbetrieb an das Bordvorrichtung (102) sendet, und
wobei die Bordvorrichtung (102), die das Signal der Rückführungsanweisung für einen Über-Nacht-Aufenthalt empfangen hat, die Stromversorgung einschaltet, wenn sie aus dem Zustand des Über-Nacht-Aufenthalts in den Normalbetrieb zurückkehrt.

3. Zugsteuervorrichtung nach Anspruch 2,
wobei die stationäre Vorrichtung (101) ein Zugdiagramm als Betriebsplan des Zugs (100) verwaltet und zumindest eines der Signale einer Startanweisung für einen Über-Nacht-Aufenthalt und die Rückführungsanweisung für einen Über-Nacht-Aufenthalt an die Bordvorrichtung (102), die in dem Zug angebracht ist, basierend auf dem Zugdiagramm sendet.

4. Zugsteuervorrichtung nach einem der Ansprüche 1 bis 3,
wobei die Bordvorrichtung (102) periodisch Informationen sendet, die einen Betriebszustand und eine Zugposition des Zugs (100) angeben, in der die Bordvorrichtung an der stationären Vorrichtung (101) angebracht ist.

5. Zugsteuervorrichtung nach Anspruch 4,
wobei die Bordvorrichtung (102) mit einer Videoaufzeichnungsvorrichtung ausgestattet ist und
wobei die Informationen, die die Zugposition des Zugs (100) angeben, in dem die Bordvorrichtung (102) angebracht ist, durch Positionsberechnungen unter Verwendung der Videoaufzeichnungsvorrichtung erhalten wird.

6. Zugsteuervorrichtung nach einem der Ansprüche 2 bis 5,
wobei die stationäre Vorrichtung (101) die Telegramm-Nachrichten, die von der Bordvorrichtung während eines Zeitraums des Auftretens einer Anomalie in der Bordvorrichtung (102) innerhalb des Zeitraums des Über-Nacht-Aufenthalts empfangen wurden, verwirft.

7. Zugsteuervorrichtung nach einem der Ansprüche 2 bis 6,
wobei die stationäre Vorrichtung (101) einen Alarm in einem Fall ausgibt, wenn die Anomalie, die in der Bordvorrichtung (102) während des Zeitraums des Über-Nacht-Aufenthalts aufgetreten ist, weiterhin bis zur Betriebsstartzeit besteht.

8. Zugsteuerverfahren, das Folgendes umfasst:
einen ersten Schritt des gegenseitigen Sendens und Empfangens von Telegramm-Nachrichten auf einer stationären Seite, an der der Betrieb eines Zugs verwaltet wird, und auf einer Bordseite im Inneren des Zugs, und des Sendens beider Signale einer Startanweisung eines Über-Nacht-Aufenthalts und der Betriebsstartzeit des Zugs von der stationären Seite an die Bordseite; und
einen zweiten Schritt des Empfangens beider Signale an der Bordseite, des Beginnens des Über-Nacht-Aufenthalts des Zugs basierend auf beiden Signalen, des Ladens von Leistung, die auf der Bordseite während eines Zeitraums des Über-Nacht-Aufenthalts benötigt wird, zumindest bis zur Betriebsstartzeit in eine Batterie als Stromversorgungseinheit, die auf der Bordseite beinhaltet ist, und des Abschaltens einer Stromversorgung nach Abschluss des Ladens.

9. Zugsteuerverfahren nach Anspruch 8, das Folgendes umfasst:
einen dritten Schritt des Sendens eines Signals einer Über-Nacht-Aufenthalts-Rückführungsanweisung zum Rückführen des Zugs aus dem Zustand des Über-Nacht-Aufenthalts in einen Normalbetrieb von der stationären Seite zur Bordseite; und
einen vierten Schritt des Empfangens des Signals der Über-Nacht-Aufenthalts-Rückführungsanweisung auf der Bordseite und des Einschaltens der Stromversorgung, wenn von dem Zustand des Über-Nacht-Aufenthalts zum Normalbetrieb zurückgekehrt wird.

10. Zugsteuerverfahren nach Anspruch 9, umfassend einen ersten Anomalieabwicklungsschritt des Verwerfens der Telegramm-Nachrichten auf der stationären Seite, die von der Bordseite während eines Zeitraums eines Auftretens einer Anomalie auf der Bordseite innerhalb des Zeitraums des Über-Nacht-Aufenthalts empfangen wurden.

11. Zugsteuerverfahren nach Anspruch 9 oder 10, umfassend einen zweiten Anomalieabwicklungsschritt des Ausgebens eines Alarms auf der stationären Seite im Fall, wenn die Anomalie, die auf der Bordseite innerhalb des Zeitraums des Über-Nacht-Aufenthalts eingetreten ist, bis zur Betriebsstartzeit weiter besteht.

## Revendications

1. Dispositif de commande de train comprenant un dispositif au sol (101) qui gère un fonctionnement d'un train (100) et un dispositif embarqué (102) qui est installé dans le train,
dans lequel le dispositif embarqué (102) est équipé d'une batterie en tant qu'unité d'alimentation d'électricité pour permettre à des dispositifs inclus dans le dispositif embarqué de fonctionner, et
dans lequel le dispositif au sol (101) et le dispositif embarqué (102) maintiennent mutuellement l'émission et la réception de messages télégraphiques ;
**caractérisé en ce que** :
le maintien mutuel de l'émission et de la réception de messages télégraphiques comprend une période pendant laquelle un état de fonctionnement du train (100) est un stationnement de nuit,
le dispositif au sol (101) transmet au dispositif embarqué (102) les deux signaux d'une instruction de début d'un stationnement de nuit et de l'heure de début de fonctionnement du train (100), et
le dispositif embarqué (102), ayant reçu les deux signaux, désactive une alimentation électrique après l'alimentation requise par le dispositif embarqué pendant une période du stationnement de nuit au moins jusqu'à ce que l'heure de début de fonctionnement soit chargée dans la batterie.

2. Dispositif de commande de train selon la revendication 1,
dans lequel le dispositif au sol (101) transmet au dispositif embarqué (102) un signal d'une instruction de retour de stationnement de nuit pour ramener le train (100) du stationnement de nuit à un fonctionnement normal, et
dans lequel le dispositif embarqué (102) ayant reçu le signal de l'instruction de retour de stationnement de nuit active l'alimentation électrique lors du retour de l'état du stationnement de nuit au fonctionnement normal.

3. Dispositif de commande de train selon la revendication 2,
dans lequel le dispositif au sol (101) gère un schéma de train en tant que programme de fonctionnement du train (100), et transmet au moins l'un des signaux de l'instruction de début du stationnement de nuit et de l'instruction de retour de stationnement de nuit au dispositif embarqué (102) installé dans le train sur la base du schéma de train.

4. Dispositif de commande de train selon l'une quelconque des revendications 1 à 3,
dans lequel le dispositif embarqué (102) transmet périodiquement des informations, indiquant un état de fonctionnement et une position de train du train (100) dans lequel le dispositif embarqué est monté , au dispositif au sol (101).

5. Dispositif de commande de train selon la revendication 4,
dans lequel le dispositif embarqué (102) est pourvu d'un dispositif d'enregistrement vidéo, et
dans lequel les informations indiquant la position du train (100) dans lequel le dispositif embarqué (102) est monté sont obtenues par des calculs de position utilisant le dispositif d'enregistrement vidéo.

6. Dispositif de commande de train selon l'une quelconque des revendications 2 à 5,
dans lequel le dispositif au sol (101) rejette les messages télégraphiques reçus du dispositif embarqué pendant une période d'apparition d'une anomalie dans le dispositif embarqué (102) pendant la période de stationnement de nuit.

7. Dispositif de commande de train selon l'une quelconque des revendications 2 à 6,
dans lequel le dispositif au sol (101) émet une alarme dans le cas où l'anomalie s'étant produite dans le dispositif embarqué (102) pendant la période du stationnement de nuit se poursuit jusqu'à l'heure de début de fonctionnement.

8. Procédé de commande de train, comprenant :
une première étape d'émission et de réception mutuelles de messages télégraphiques du côté sol où le fonctionnement d'un train est géré et du côté embarqué à l'intérieur du train, et d'émission des deux signaux d'une instruction de début d'un stationnement de nuit et de l'heure de début de fonctionnement du train à partir du côté sol vers le côté embarqué ; et
une deuxième étape consistant à recevoir les deux signaux du côté embarqué, à commencer le stationnement de nuit du train sur la base des deux signaux, à charger l'électricité requise du côté embarqué pendant une période du stationnement de nuit au moins jusqu'à l'heure de début de fonctionnement d'une batterie en tant qu'unité d'alimentation d'électricité incluse du côté embarqué, et à désactiver une alimentation après la fin de la charge.

9. Procédé de commande de train selon la revendication 8, comprenant :
une troisième étape d'émission d'un signal d'une instruction de retour de stationnement de nuit pour ramener le train de l'état du stationnement de nuit à un fonctionnement normal à partir du côté sol vers le côté embarqué ; et
une quatrième étape de réception du signal de l'instruction de retour de stationnement de nuit du côté embarqué et d'activation de l'alimentation électrique lors du retour de l'état de stationnement de nuit au fonctionnement normal.

10. Procédé de commande de train selon la revendication 9, comprenant une première étape de gestion d'anomalie consistant à rejeter les messages télégraphiques, du côté sol, reçus en provenance du côté embarqué pendant une période d'apparition d'une anomalie du côté embarqué pendant la période du stationnement de nuit.

11. Procédé de commande de train selon la revendication 9 ou 10, comprenant une seconde étape de gestion d'anomalie consistant à émettre une alarme du côté sol dans le cas où l'anomalie s'étant produite du côté embarqué pendant la période du stationnement de nuit se poursuit jusqu'à l'heure de début de fonctionnement.
